# EUROPÄISCHE PATENTSCHRIFT

(11) **EP 1 827 981 B1**
(45) Veröffentlichungstag und Bekanntmachung des Hinweises auf die Patenterteilung: **05.01.2011**
(21) Anmeldenummer: 05801873.0
(22) Anmeldetag: 09.11.2005
(51) Int. Cl.: B65B 1/32, D01G 13/00, A24C 1/02, G01G 17/02, G01G 13/06, B65B 1/04

(54) **VORRICHTUNG ZUM HERSTELLEN EINES HOMOGENEN SCHNITTTABAKSTROMS**
DEVICE FOR THE CREATION OF A HOMOGENEOUS CUT TOBACCO FLOW
DISPOSITIF DE PRODUCTION D'UN FLUX DE TABAC COUPE HOMOGENE

(30) Priorität: 22.12.2004 DE 102004063057
(43) Veröffentlichungstag der Anmeldung: 05.09.2007
(73) Patentinhaber: Focke & Co. (GmbH & Co. KG), 27283 Verden (DE)
(72) Erfinder: OTT, Christina, 22523 Hamburg (DE); BARKMANN, Ralf, 21031 Hamburg (DE); HARMS, Stefan, 22395 Hamburg (DE); HOPPE, Reinhard, 21395 Tespe (DE); JESSEN, Thomas, 21039 Börnsen (DE); BAUMGARDT, Torben, 21684 Stade (DE)
(74) Vertreter: Bolte, Erich
(86) Internationale Anmeldenummer: PCT/EP2005/011962
(87) Internationale Veröffentlichungsnummer: WO 2006/074728

(56) Entgegenhaltungen:
- US-A- 4 235 248
- US-A- 4 583 571
- US-A- 5 115 819
- US-A- 5 331 977

## Beschreibung

Die Erfindung betrifft eine Vorrichtung zum mechanischen Aufbereiten von faserigem Material, insbesondere geschnittenem Tabak gemäß Oberbegriff des Anspruchs 1.

Vorrangig befasst sich die Erfindung mit der Herstellung von exakten Portionen aus geschnittenem Tabak mittels Tabakwaage. Die Tabakportionen werden nachfolgend verpackt. Der hinsichtlich der Zusammensetzung vorbereitete Tabak wird in einem fortlaufenden Tabakstrom bzw. Tabakstrang zugeführt. Von diesem werden die Portionen abgetrennt und der Tabakwaage zugeführt. Eine derartige Vorrichtung für die Herstellung von verpackungsfähigen Tabakportionen ist bekannt durch US 4 583 571. Bei diesem Stand der Technik wird eine zugeführte Tabakmenge durch eine umlaufende Stachelwalze mit am Außenumfang angeordneten Nadeln aufgelöst unter Bildung eines Tabakstroms. Dieser wird in Abwärtsrichtung transportiert und bis zur Übergabe an eine Tabakwaage durch weitere Walzen mit am Außenumfang angeordneten Nadeln bearbeitet. Eine so ausgebildete Vorrichtung führt hinsichtlich der Auflockerung und Homogenisierung des Tabaksstroms nicht zu einem optimalen Ergebnis.

Der Erfindung liegt die Erkenntnis zugrunde, dass eine Auflockerung des Tabakstroms durch mechanische Organe im Bereich einer einzigen Station nicht ausreichend ist. Der Grundgedanke der Erfindung besteht demnach darin, dass der Tabakstrom in mehreren Behandlungsstationen mit unterschiedlichen ausgebildeten bzw. unterschiedlich wirkenden Auflockerungsorganen bearbeitet wird. Dadurch wird ein optimal, nämlich gleichförmig strukturierter Tabakstrom geschaffen und andererseits ein Zerreisen von Tabakfasern verhindert bzw. reduziert.

Der Erfindung liegt deshalb die Aufgabe zugrunde, die Eingangs genannte Vorrichtung so auszubilden, dass durch zielgerichtete, aufeinander abgestimmte Bearbeitung des Tabaks ein solch optimaler Tabakstrom erzeugt wird.

Zur Lösung dieser Aufgabe ist die erfindungsgemäße Vorrichtung mit den Merkmalen des kennzeichnenden Teils des Anspruchs 1 ausgebildet.

Vorteilhaft ist eine Vorrichtung mit drei Bearbeitungsstationen, nämlich der Trommel als erster Bearbeitungsstation, einem Schrägförderer als zweiter Bearbeitungsstation und den Nadelkämmen als dritter Bearbeitungsstation.

Weitere Einzelheiter der erfindungsgemäßen Vorrichtung werden nachfolgend anhand von Ausführungsbeispielen näher erläutert. Es zeigt:

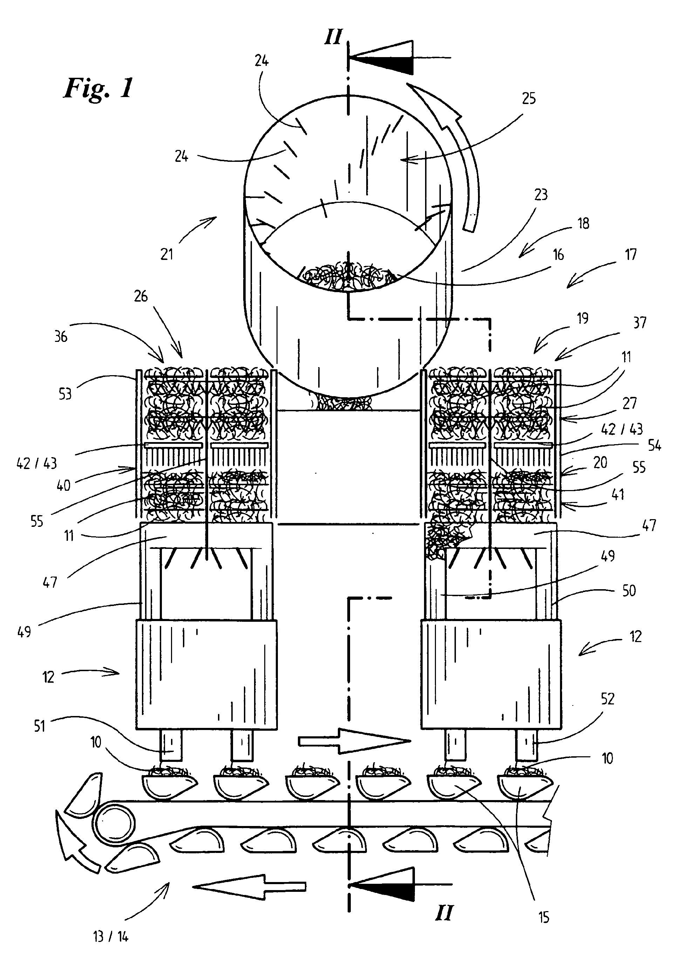

- Fig. 1: die Vorrichtung in einer Frontansicht,
- Fig. 2: die Vorrichtung gemäß Fig. 1 in Seitenansicht bzw. im Vertikalschnitt entsprechend Schnittebene II - II in Fig. 1

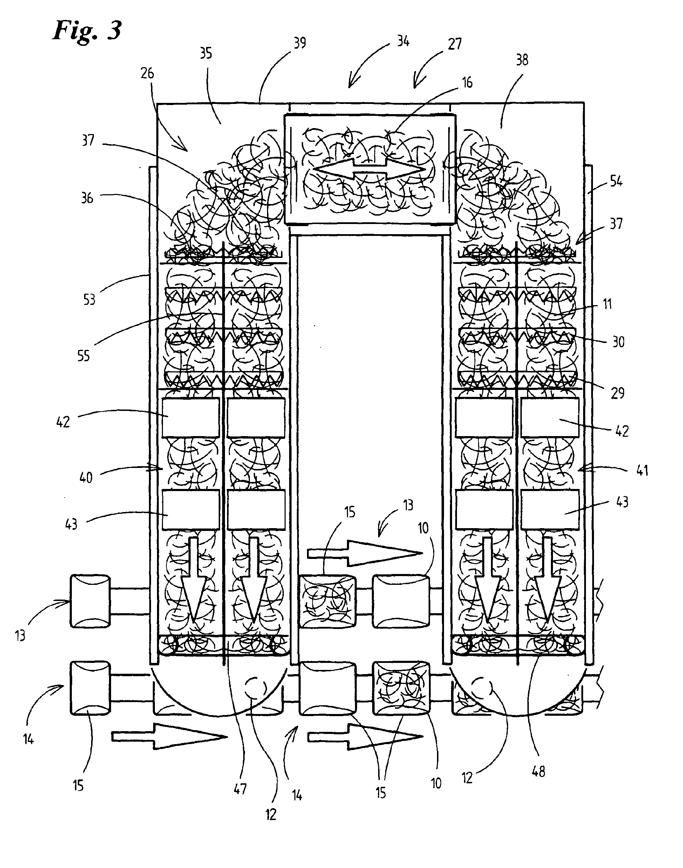

- Fig. 3: eine Einzelheit der Vorrichtung in vergrößertem Maßstab nämlich eine Draufsicht auf einen Teilbereich entsprechend Sichtebene III - III in Fig. 2,
- Fig. 4: einen Querschnitt eines Tabakförderers in der Schnittebene IV - IV der Fig. 2 bei vergrößertem Maßstab,
- Fig. 5 bis Fig.7: unterschiedliche Stellungen eines Arbeitsorgans zur Behandlung eines Tabakstroms in Seitenansicht,
- Fig. 8: die Bearbeitungsstation gemäß Fig. 5 bis Fig. 7 in einer anderen Aus- führung.

Bei der Herstellung gleichgroßer bzw. gleichgewichtiger Tabakportionen 10 aus Schnitttabak muss zunächst ein gleichförmiger, in der Struktur von Tabakfasern homogener Tabakstrom 11 bzw. Tabakstrang geschaffen werden, dieser wird einer Tabakwaage 12 zugeführt. Im Bereich derselben werden die Tabakportionen 10 hergestellt und an Abförderer übergeben, nämlich an Becherförderer 13, 14 mit Bechern 15 für je eine Tabakportion 10.

Der Tabakwaage 12 ist eine apparative Einheit 17 vorgeordnet, in deren Bereich ein ankommender Tabakstrom, nämlich Hauptstrom 16, in mehreren Bearbeitungsstationen 18, 19, 20 durch mechanische Organe hinsichtlich der Struktur der Fasern homogenisiert wird. Die Bearbeitungsstation 18, 19, 20 bzw. deren Organe bzw. Werkzeuge sind hinsichtlich der Bearbeitung des Tabaks aufeinander abgestimmt. Im Bereich der Bearbeitungsstation 18 wird der Hauptstrom 16 behandelt und gefördert. Im Bereich der Bearbeitungsstation 19 wird der Hauptstrom 16 in mehrere einzelne Tabakströme 11 aufgeteilt, und zwar in vier Tabakströme 11, die getrennt weitergefördert, bearbeitet und schließlich je einer Wägeeinheit der Tabakwaage 12 zugeführt werden.

Die erste Bearbeitungsstation 18 besteht aus einem drehenden Hohlkörper, nämlich einer Trommel 21. In diese wird der auf einem Zuförderer 22 ankommende Hauptstrom 16 in Längsrichtung eingeführt. Die Trommel 21 ist in Förderrichtung abwärts geneigt, so dass der Tabakstrom 11 infolge Drehung der Trommel 21 durch diese hindurchtransportiert wird.

An der Innenseite der Trommel 21 bzw. eines Trommelmantels 23 sind Bearbeitungsorgane zur Auflockerung und Homogenisierung des Tabaks angeordnet. Es handelt sich dabei um Stifte bzw. Nadeln 24, die etwa in radiale Richtung in das Innere der Trommel 21 weisen. Die Nadeln 24 sind in (sechs) Reihen 25 angeordnet, und zwar in schraubenförmigen Windungen in Längsrichtung der Trommel 21 verlaufend. Vorzugsweise ist die Anordnung der Reihen 25 so gewählt, dass die Windungen der Drehrichtung der Trommel 21 entgegen gerichtet sind. Dadurch wird der Effekt des Auflockerns während des Transports des Tabaks bzw. des Hauptstroms 16 durch die Trommel 21 hindurch verbessert.

Nach dem Verlassen der Trommel 21 gelangt der Tabakstrom bzw. Hauptstrom 16 in den Bereich der zweiten Bearbeitungsstation 19. Diese besteht aus mindestens einem, bei dem vorliegendem Beispiel aus zwei nebeneinanderliegenden Tabakförderern 26, 27. Jeder dieser Tabakförderer 26, 27 ist Teil der Bearbeitungsstation 19. Jeder Tabakförderer 26, 27 besteht zu diesem Zwecke aus einem Endlosgurt 28 mit an der Außenseite angeordneten Erhebungen, Vorsprüngen oder Mitnehmern 29, die in den Tabakstrom 11 eintreten. Bei dem vorliegenden Ausführungsbeispiel bestehen die Mitnehmer 29 aus zackenförmig bzw. sägezahnartig ausgebildeten Querstegen. Eine Vielzahl dieser Querstege bzw. Mitnehmer 29 ist mit Abstand voneinander und in Förderrichtung geneigt am Tabakförderer 26, 27 angeordnet. Zahnartige Vorsprünge 30 treten in den Tabak ein.

Mit dem Tabakförderer 26, 27 wirkt ein ortsfest positioniertes, angetriebenes Gegenorgan zusammen. Es kann sich dabei um eine Nadeln bzw. Stacheln aufweisende, drehende Walze handeln. Bei dem Ausführungsbeispiel ist ein kurzes Band 31 vorgesehen, ein Abkämmband, welches mit Abstand neben dem Tabakförderer 26, 27 gelagert ist, Vorsprünge 32 aufweist und gegenläufig zum Tabakförderer 26, 27 angetrieben ist. Die Vorsprünge 32 sind vorzugsweise analog zu den Mitnehmern 29 ausbildet und gegenläufig zu diesen gerichtet. Durch Zusammenwirken der Tabakförderer 26, 27 mit dem zugeordneten Band 31 wird ebenfalls ein schonendes Auflockern des Tabaks bewirkt. Die Vorsprünge 32 sind so ausgebildet und angeordnet, dass sie berührungslos an den Vorsprüngen 30 der Tabakförderer 26, 27 vorbeibewegt werden.

Der Tabakförderer 26, 27 ist als Steilförderer ausgebildet mit einem nahezu senkrechten verlaufenden Fördertrum 33 und unterhalb der ersten Bearbeitungsstation 18 angeordnet.

Der Tabak bzw. Tabakstrom 16 wird nach Verlassen der Trommel 21 einem Zwischenförderer zugeführt, nämlich einem Verteilerband 34. Dieses ist mit Abstand unterhalb eines Austrittsendes der Trommel 21 angeordnet und quer gerichtet. Das insbesondere aus einem einzelnen Gurt bestehende Verteilerband 34 bewirkt die Verteilung des Tabaks auf den einen oder anderen Tabakförderer 26, 27. Diese sind mit Abstand voneinander angeordnet. Das Verteilerband 34 ist vorzugsweise mittig zu den beiden Tabakförderern 26, 27 positioniert.

Jedem Tabakförderer 26, 27 ist ein tiefer gelegener Auffangbehälter 35, 38 zugeordnet. Dieser ist als lediglich nach oben offener, trichterförmiger Behälter ausgebildet. Eine Außenwand 39 des Auffangbehälters 35, 38 ist in Abwärtsrichtung schräg verlaufend zu einem Aufnahmebereich des Tabakförderers 26, 27, nämlich zu einem unteren Umlenkbereich des Endlosgurts 28. Das Verteilerband 34 ist in beiden Richtungen antreibbar, sodass der Tabak alternativ dem einen oder anderen Auffangbehälter 35, 38 zugeführt wird. Zweckmäßigerweise wird der Füllgrad im Auffangbehälter 35, 38 überwacht, zum Beispiel durch optische oder mechanische oder elektronische Sensoren. Je nach dem festgestellten Füllgrad wird das Verteilerband 34 in der einen oder anderen Richtung bewegt. Der Tabakförderer 26, 27 entnimmt dem im Bereich des Auffangbehälters 35, 38 gebildeten Tabakvorrat ständig Tabak und transportiert diesen aufwärts im Bereich des Fördertrums 33.

Der Zwischenförderer, nämlich das Verteilerband 34, ist auch für eventuelle Störungen im Betrieb des einen oder anderen Tabakförderers 26, 27 von Bedeutung. Bei einem Ausfall einer dieser getrennten Verarbeitungslinien für den Tabak, zum Beispiel beim Ausfall einer Tabakwaage, kann der Antrieb des Verteilerbandes 34 so umgeschaltet werden, dass - bei gegebenenfalls reduzierter Fördergeschwindigkeit - lediglich Tabak zu einem der beiden (funktionierenden) Tabakförderer 26, 27 transportiert wird. Die Vorrichtung läuft dann insgesamt mit halber Geschwindigkeit weiter, bis die Störung behoben ist.

Eine Besonderheit besteht darin, dass die ankommende Tabakmenge, also der ursprüngliche Hauptstrom 16, in mehrere, voneinander getrennte Einzelströme aufgeteilt wird, nämlich in die Tabakströme 11. Bei dem vorliegenden Beispiel folgt diese Aufteilung im Bereich der Bearbeitungsstation 19, also durch den Tabakförderer 26, 27. Zu diesem Zweck sind die (zwei) Tabakförderer 26, 27 im Abstand voneinander angeordnet. Umlenk-und Führungswalzen sind an Seitenwänden 53, 54 gelagert. Jeder Tabakförderer 26, 27 bildet darüber hinaus zwei von einander abgegrenzte Arbeitsbahnen 36, 37, sodass im Bereich der (zwei) Tabakförderer 26, 27 vier voneinander abgegrenzte Teilströme bzw. Tabakströme 11 gebildet sind. Die Arbeitsbahnen 36, 37 werden jeweils durch eine Zwischenwand 55 geschaffen, die mittig im Bereich der Tabakförderer 26, 27 oberhalb des Fördertrums 33 angeordnet sind. Die gesondert befestigten Zwischenwände 55 erstrecken sich bis unmittelbar benachbart zum Fördertrum 33, sodass die gebildeten Tabakströme 11 wirksam voneinander abgegrenzt sind. Die quergerichteten Mitnehmer 29 sind im Bereich der Zwischenwand 55 unterbrochen. Die Abgrenzung der Tabakströme 11 verhindert, dass der bereits aufgelockerte Tabak während des Transports wieder Zusammenballungen bildet.

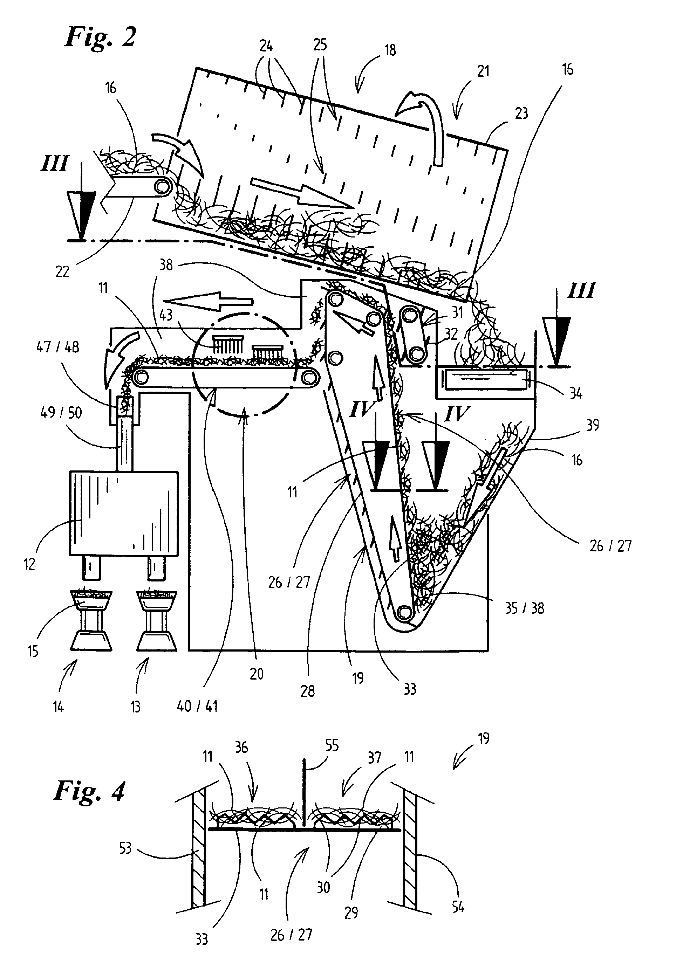

Die Tabakförderer 26, 27 transportieren den Tabak bzw. die vier Tabakströme 11 zur nächsten, dritten Bearbeitungsstation 20. Im Bereich derselben wird der Tabak in horizontaler Ebene transportiert, und zwar auf (zwei) Tabakgurten 40, 41. Die Aufteilung in vier Arbeitsbahnen 36, 37 mit Hilfe der Zwischenwand 55 ist im Bereich der Tabakgurte 40, 41 analog zu Fig. 4 fortgesetzt.

Zur weiteren Homogenisierung und Auflockerung des Tabaks sind Nadelkämme 42, 43 oberhalb der Tabakgurte 40, 41 bzw. oberhalb des Tabakstroms 11 angeordnet. Jeder Nadelkamm 42, 43 besteht aus einer Vielzahl von in Förderrichtung und quer hierzu nebeneinander angeordneten aufrechten Nadeln 44, die einen Abstand voneinander aufweisen. Die Nadeln 44 sind mit einem gemeinsamen rechteckigen oder quadratischen Träger 45 verbunden. Jeder Nadelkamm 42, 43 bzw. Träger 45 ist mit einer nicht gezeigten Mechanik verbunden, die eine Bewegung des Nadelkamms 42, 43 in Vertikalrichtung und in Horizontalrichtung ermöglicht. Die Auflockerung des Tabaks wird durch Relativbewegung der Nadelkämme 42, 43 zum Tabakstrom 11 und zueinander bewirkt.

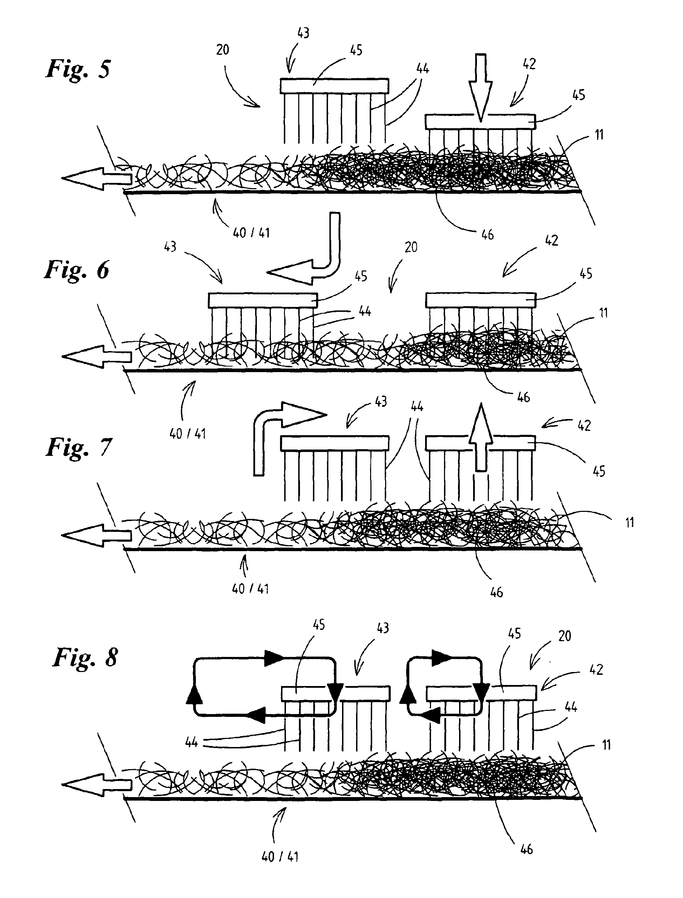

Bei der Ausführungsform gemäß Fig. 5 bis Fig. 7 ist einer der Nadelkämme, nämlich der in Förderrichtung des Tabak rückwärtige Nadelkamm 42, lediglich auf- und abbewegbar. In der unteren Stellung befinden sich die Nadeln 44 innerhalb des Tabakstroms 11 mit gewissen Abstand vom Tabakgurt 40, 41 (Fig. 5, Fig. 6). In der oberen Endstellung befinden sich die Nadeln 44 außerhalb des Tabakstroms 11. Der andere Nadelkamm 43 ist ebenfalls auf- und abbewegbar bei vorzugsweise gleicher Eintauchtiefe der Nadeln 44 in den Tabak bei unterer Endstellung (Fig. 6). Darüber hinaus ist der Nadelkamm 43 in Horizontalrichtung bewegbar, und zwar in Förderrichtung des Tabakstroms 11 (Fig. 6) und zurück in die Ausgangstellung. Die beiden Nadelkämme 42, 43 wirken gemäß Fig. 5 bis Fig. 7 so zusammen, dass der Nadelkamm 42 durch Abwärtsbewegung in Tabakstrom 11 eintritt. Der in geringen Abstand angeordnete Nadelkamm 43 tritt ebenfalls in den Tabakstrom 11 ein und wird sodann in Förderrichtung des Tabakstroms 11 bewegt in eine Posi-tion mit größerem Abstand vom Nadelkamm 42 (Fig. 6). Eine in diesen Bereich etwa gebildete Tabakverdichtung 46 wird durch diese Relativbewegung der beiden Nadelkämme 42, 43 aufgelöst. In der Endstellung gemäß Fig. 6 wird der Nadelkamm 43 aufwärts bewegt und außer Eingriff mit dem Tabakstrom 11 gebracht. Der Nadelkamm 43 kehrt sodann in die Ausgangstellung benachbart zum Nadelkamm 42 zurück.

Die Ausführung gemäß Fig. 8 arbeitet ebenfalls mit zwei Nadelkämmen 42, 43 in Förderrichtung des Tabakstroms 11 nebeneinanderliegend. Bei dieser Version sind beide Nadelkämme 42, 43 auf- und abbewegbar sowie in Förderrichtung des Tabakstroms 11 bewegbar. Die Bewegungsamplitude nach Eintauchen der beiden Nadelkämme 42, 43 in den Tabakstrom 11 ist unterschiedlich. Der in Förderrichtung rückwärtige Nadelkamm 42 wird entlang eines kürzeren Abschnitts in Transportrichtung bewegt, sodann aufwärts und danach in die Ausgangsstellung zurück bewegt. Der andere Nadelkamm 43 vollzieht im Prinzip dieselbe Bewegung, mit einer längeren Bewegungsstrecke nach Eintauchen in den Tabakstrom 11.

Im Anschluss an die (dritte) Behandlungsstation 20 wird der Tabakstrom 11 durch Querförderer 47, 48 am Ende der Tabakgurte 40, 41 seitwärts gefördert in den Bereich von aufrechten Fallrohren 49, 50. Diese übergeben den Tabak bzw. den jeweiligen Tabakstrom 11 an die Tabakwaage 12, bzw. an eine Wägezelle derselben. Die Querförderer 47, 48 sind als Schwingförderer ausgebildet.

An der Unterseite der hier der Einfachheit halber als zylindrischer Behälter ausgebildeten Tabakwaage 12 sind ebenfalls Fallrohre bzw. Abgaberohre 51, 52 angeordnet. Diese sind in ihrer Relativstellung auf die Becher 15 der taktweise bewegbaren Becherförderer 13, 14 ausgerichtet.

Optimale Ergebnisse werden erzielt, wenn die drei Bearbeitungsstationen in der beschriebenen Weise ausgebildet und in der gegebenen Folge angeordnet sind. Jede Bearbeitungsstation bzw. die dieser zugeordneten Organe sind aber auch eigenständig für den Zweck der Auflockerung von Tabak einsetzbar. Eine Besonderheit ist die Aufteilung des zugeführten Hauptstroms in mehrere Teilströme bzw. Tabakströme.

### Bezugszeichenliste

- 10: Tabakportion
- 11: Tabakstrom
- 12: Tabakwaage
- 13: Becherförderer
- 14: Becherförderer
- 15: Becher
- 16: Hauptstrom
- 17: Einheit
- 18: Bearbeitungsstation
- 19: Bearbeitungsstation
- 20: Bearbeitungsstation
- 21: Trommel
- 22: Zuförderer
- 23: Trommelmantel
- 24: Nadel
- 25: Reihen
- 26: Tabakförderer
- 27: Tabakförderer
- 28: Endlosgurt
- 29: Mitnehmer
- 30: Vorsprung
- 31: Band
- 32: Vorsprung
- 33: Fördertrum
- 34: Verteilerband
- 35: Auffangbehälter
- 36: Arbeitsbahn
- 37: Arbeitsbahn
- 38: Auffangbehälter
- 39: Außenwand
- 40: Tabakgurt
- 41: Tabakgurt
- 42: Nadelkamm
- 43: Nadelkamm
- 44: Nadel
- 45: Träger
- 46: Tabakverdichtung
- 47: Querförderer
- 48: Querförderer
- 49: Fallrohr
- 50: Fallrohr
- 51: Abgaberohr
- 52: Abgaberohr
- 53: Seitenwand
- 54: Seitenwand
- 55: Zwischenwand

## Patentansprüche

1. Vorrichtung zum mechanischen Aufbereiten von faserigem Material, insbesondere geschnittenem Tabak, zur Bildung eines gleichmäßigen, homogenen Faser- bzw. Tabakstrangs bzw. Tabakstroms (11), von dem im Bereich einer Tabakwaage (12) Tabakportionen (10) abtrennbar sind, wobei der Tabakstrom (11) durch mehrere Bearbeitungsstationen (18, 19, 20) hindurchgefördet wird, in denen der Tabakstrom (11) mit Stacheln, Nadeln oder dergleichen aufweisenden Walzen in mehreren Stufen aufgelockert und homogenisiert wird, **gekennzeichnet durch** folgende Merkmale:
a) in einer ersten Bearbeitungsstation (18) wird der Tabakstrom (11) **durch** eine Trommel (21) hindurchgefördert, die an einem Trommelmantel (23) innenseitig in Reihen (25) angeordnete, abstehende Nadeln (24) aufweist, die bei drehender Trommel (21) in den Tabakstrom (11) während des Transports desselben eintreten,
b) in einer weiteren Bearbeitungsstation (20) wird der Tabakstrom (11) **durch** mehrere Nadelkämme (42, 43) bearbeitet, die in den transportierten Tabakstrom (11) von oben her einführbar sind und ein Auflockern des Tabaks **durch** Relativbewegung der Nadelkämme (42, 43) zueinander und/oder zum Tabakstrom (11) bewirken,
c) der Tabakstrom (11) wird nach Verlassen der weitnen Bearbeitungsstation (20) in Querrichtung zu einem Fallrohr (49, 50) gefördert zur Übergabe des Tabaks an die Tabakwaage (12).

2. Vorrichtung nach Anspruch 1, **dadurch gekennzeichnet, dass** der Tabakstrom bzw. ein zugeführter Hauptstrom (16) während der Bearbeitung in mehrere Teilströme bzw. Tabakströme (11) aufgeteilt und diese geteilten Tabakströme (11) durch Bearbeitungsstationen (19, 20) hindurchgefördert und/oder einer Tabakwaage (12) zugeführt werden.

3. Vorrichtung nach Anspruch 1 oder 2, **dadurch gekennzeichnet, dass** die Reihen (25) der Nadeln (24) in der Trommel (21) in Schraubenlinien angeordnet sind, insbesondere in sechs bis acht längs des Umfangs des Trommelmantels (23) verteilten Reihen, wobei vorzugsweise die Richtung der Windungen der Drehrichtung der Trommel (21) entgegen gerichtet ist.

4. Vorrichtung nach einem der Ansprüche1-3, **dadurch gekennzeichnet, dass** die Trommel (21) in Förderrichtung des Tabaks abwärts geneigt ist, derart, dass der Tabak ohne zusätzliche Fördermittel durch die Trommel (21) hindurch-fördert wird.

5. Vorrichtung nach einem der Ansprüche 1-4, **dadurch gekennzeichnet, dass** eine zweite Bearbeitungsstation (19) mindestens einen Tabakförderer (26, 27) aufweist, der Tabak nach Austritt aus der ersten Bearbeitungsstation (18), insbesondere aus der Trommel (21) aufnimmt und mit Hilfe von an dem Tabakförderer (26, 27) angeordneten Mitnehmern (29) transportiert, insbesondere in einer im wesentlichen aufrechten Transportebene.

6. Vorrichtung nach Anspruch 5 **dadurch gekennzeichnet, dass** mit dem Tabakförderer (26, 27) ein bewegbares Gegenorgan zusammenwirkt, insbesondere ein entgegen der Förderrichtung des Tabakförderers (26) angetriebenes Band (31) mit Vorsprüngen (32).

7. Vorrichtung nach Anspruch 5 oder 6, **dadurch gekennzeichnet, dass** mindestens zwei Tabakförderer (26, 27) nebeneinander angeordnet und vorzugsweise synchron angetrieben sind, denen der Tabak über einen Übergabeförderer zuführbar ist, insbesondere durch ein quer gerichtetes, hinsichtlich Fördergeschwindigkeit und/oder Förderrichtung steuerbares Verteilerband (34).

8. Vorrichtung nach Anspruch 7, **dadurch gekennzeichnet, dass** das Verteilerband (34) von der ersten Bearbeitungsstation (18) kommenden Tabak alternativ in einen jedem Tabakförderer (26, 27) zugeordneten Auffangbehälter (35, 38) transportiert, wobei das Verteiterband (34) vorzugsweise nach Maßgabe der Füllung des Auffangbehälters (35, 38) steuerbar ist.

9. Vorrichtung nach einem der Ansprüche, 5-8 **dadurch gekennzeichnet, dass** im Bereich der zweiten Bearbeitungsstation (19), insbesondere im Bereich der (beiden) Tabakförderer (26, 27) mehrere, insbesondere vier Arbeitsbahnen (36, 37) gebildet sind, nämlich zwei Arbeitsbahnen (36, 37) jedes Tabakförderers (26, 27), wobei entlang jeder Arbeitsbahn (36, 37) ein separater (Teil-)Tabakstrom (11) förderbar ist.

10. Vorrichtung nach einem der Ansprüche 2-9, **dadurch gekennzeichnet, dass** jedem Tabakstrom (11) zwei in Förderrichtung aufeinanderfolgende Nadelkämme (42, 43) zugeordnet sind, die vorzugsweise gleichzeitig von oben eher mit Nadeln (44) in den Tabakstrom (11) eintreten, wobei die Nadelkämme (42, 43) in Förderrichtung des Tabakstroms (11) relativ zueinander bewegbar sind.

11. Vorrichtung nach einem der Ansprüche 1-10, **dadurch gekennzeichnet, dass** ein Nadelkamm (42) nach Eintritt in den Tabakstrom (11) unbeweglich verharrt oder eine geringe Bewegung in Förderrichtung und der andere Nadelkamm (43) nach Eintritt der Nadeln (44) in den Tabakstrom (11) eine Bewegung in Transportrichtung des Tabakstroms (11) ausführt, wobei die Nadelkämme (42, 43) anschließen durch Aufwärtsbewegung aus dem Tabakstrom (11) zurückbewegbar sind.

## Claims

1. An apparatus for mechanically preparing fibrous material, in particular cut tobacco, for forming a uniform, homogeneous fibre or tobacco strand or tobacco stream (11), from which tobacco portions (10) can be severed in the region of tobacco scales (12), with the tobacco stream being conveyed through a plurality of processing stations (18, 19, 20) in which the tobacco stream (11) is loosened and homogenized in a plurality of stages by means of rollers equipped with spikes, needles or the like **characterized by** the following features:
a) in a first processing station (18) the tobacco stream (11) is conveyed through a drum, which has projecting needles (24) that are arranged in rows (25) on the inside of a drum casing (23) and which, when the drum (21) rotates, enter into the tobacco stream (11) as the latter is transported,
b) in a further processing station (20), the tobacco stream (11) is processed by a plurality of needle combs (42, 43), which can be introduced from above into the transported tobacco stream (11), thus causing the tobacco to be loosened by the movement of the needle combs (42, 43) relative to one another and/or to the tobacco stream (11),
c) upon leaving the further processing station (20), the tobacco stream (11) is conveyed in the transverse direction to a vertical tube (49, 50) for transfer of the tobacco to the tobacco scales (12).

2. The apparatus as claimed in claim 1, **characterized in that** the tobacco stream or a fed main stream (16) is divided up, during processing, into a plurality of sub-streams or tobacco streams (11), and these divided tobacco streams (11) are conveyed through processing stations (19) and/or fed to tobacco scales (12).

3. The apparatus as claimed in claim 1 or 2, **characterized in that** the rows (25) of needles (24) in the drum (21) are arranged in helical lines, in particular in six to eight rows distributed along the circumference of the drum casing (23), preferably with the direction of the windings running counter to the direction of rotation of the drum (21).

4. The apparatus as claimed in one of the claims 1 - 3, **characterized in that** the drum (21) is inclined downward in the conveying direction of the tobacco such that the tobacco is conveyed through the drum (21) without any additional conveying means.

5. The apparatus as claimed in one of the claims 1 - 4, **characterized in that** a second processing station (19) has at least one tobacco conveyor (26, 27) which receives tobacco following its exit from the first processing station (18), in particular from the drum (21), and transports it, in particular in an essentially upright transporting plane, with the aid of carry-along elements (29) arranged on the tobacco conveyor (26, 27).

6. The apparatus as claimed in claim 5, **characterized in that** the tobacco conveyor (26, 27) interacts with a movable counterpart, in particular a belt (31) with protrusions (32), which is driven counter to the conveying direction of the tobacco conveyor (26).

7. The apparatus as claimed in claim 5 or 6, **characterized in that** at least two tobacco conveyors (26, 27) are arranged one beside the other and are driven preferably synchronously, it being possible for the tobacco to be fed to them via a transfer conveyor, in particular by a transversely directed distributor belt (34) which can be controlled in respect of conveying speed and/or conveying direction.

8. The apparatus as claimed in claim 7, **characterized in that** tobacco coming from the first processing station (18) is transported by the distributor belt (34) alternately into a collecting container (35, 38) assigned to each tobacco conveyor (26, 27), it preferably being possible for the distributor belt (34) to be controlled in accordance with the degree of filling of the collecting container (35, 38).

9. The apparatus as claimed in one of the claims 5 - 8, **characterized in that** formed in the region of the second processing station (19), in particular in the region of the (two) tobacco conveyors (26, 27), are a plurality of, in particular four, operating paths (36, 37), namely two operating paths (36, 37) for each tobacco conveyor (26, 27), it being possible for a separate tobacco (sub-)stream (11) to be conveyed along each operating path (36, 37).

10. The apparatus as claimed in one of the claims 2 - 9, **characterized in that**, each tobacco stream (11) is assigned two needle combs (42, 43) which follow one after the other in the conveying direction and have needles (44) entering into the tobacco stream (11), preferably simultaneously from above, it being possible for the needle combs (42, 43) to be moved relative to one another in the conveying direction of the tobacco stream (11).

11. The apparatus as claimed in one of the claims 1 - 10, **characterized in that** one needle comb (42), following entry into the tobacco stream (11), remains stationary therein, or executes a small movement in the conveying direction, and the other needle comb (43), following entry of the needles (44) into the tobacco stream (11), executes a movement in the transporting direction of the tobacco stream (11), it then being possible for the needle combs (42, 43) to be moved back out of the tobacco stream (11) by way of an upward movement.

## Revendications

1. Dispositif de préparation mécanique d'un matériau fibreux, en particulier de tabac coupé, pour la formation d'un cordon de fibres ou de tabac ou d'un flux de tabac homogène uniforme (11), duquel des portions de tabac (10) peuvent être séparées dans une zone d'une balance à tabac (12), dans lequel le flux de tabac (11) est transporté à travers plusieurs stations de traitement (18, 19, 20), dans lesquelles le flux de tabac (11) est disloqué et homogénéisé en plusieurs étapes avec des rouleaux présentant des barbes, des aiguilles ou analogues, **caractérisé par** les caractéristiques suivantes:
a) dans une première station de traitement (18), le flux de tabac (11) est transporté à travers un tambour (21), qui présente des aiguilles dressées (24), disposées en rangées (25) du côté intérieur sur une enveloppe du tambour (23), et qui pénètrent dans le flux de tabac (11) pendant le transport de celui-ci lorsque le tambour (21) tourne,
b) dans une autre station de traitement (20), le flux de tabac (11) est traité par plusieurs peignes à aiguilles (42, 43), qui peuvent être introduits par le haut dans le flux de tabac transporté (11) et provoquent une dislocation du tabac par un mouvement relatif des peignes à aiguilles (42, 43) l'un par rapport à l'autre et/ou par rapport au flux de tabac (11),
c) après avoir quitté l'autre station de traitement (20), le flux de tabac (11) est transporté en direction transversale jusqu'à un tube de chute (49, 50) afin de transférer le tabac à la balance à tabac (12).

2. Dispositif selon la revendication 1, **caractérisé en ce que** le flux de tabac ou un flux principal amené (16) est divisé pendant le traitement en plusieurs flux partiels ou flux de tabac (11) et ces flux de tabac divisés (11) sont transportés à travers des stations de traitement (19, 20) et/ou envoyés à une balance à tabac (12).

3. Dispositif selon la revendication 1 ou 2, **caractérisé en ce que** les rangées (25) des aiguilles (24) sont disposées dans le tambour (21) en lignes hélicoïdales, en particulier en six à huit rangées réparties de long du pourtour de l'enveloppe du tambour (23), dans lequel la direction des spires est de préférence opposée à la direction de rotation du tambour (21).

4. Dispositif selon l'une quelconque des revendications 1 à 3, **caractérisé en ce que** le tambour (21) est incliné vers le bas dans la direction de transport du tabac, de telle manière que le tabac soit transporté à travers le tambour (21) sans moyen de transport supplémentaire.

5. Dispositif selon l'une quelconque des revendications 1 à 4, **caractérisé en ce qu'**une deuxième station de traitement (19) présente au moins un transporteur de tabac (26, 27), qui reçoit du tabac après la sortie de la première station de traitement (18), en particulier sortant du tambour (21), et le transporte à l'aide de moyens d'entraînement (29) disposés sur le transporteur de tabac (26, 27), en particulier dans un plan de transport essentiellement vertical.

6. Dispositif selon la revendication 5, **caractérisé en ce qu'**un organe opposé mobile coopère avec le transporteur de tabac (26, 27), en particulier une bande (31) avec des protubérances (32) entraînée dans la direction opposée à la direction de transport du transporteur de tabac (26).

7. Dispositif selon la revendication 5 ou 6, **caractérisé en ce qu'**au moins deux transporteurs de tabac (26, 27) sont disposés l'un à côté de l'autre et entraînés de préférence de façon synchrone, auxquels le tabac peut être amené via un transporteur de transfert, en particulier au moyen d'une bande de distribution (34) orientée transversalement, dont la vitesse de transport et/ou la direction de transport peut/peuvent être commandée(s).

8. Dispositif selon la revendication 7, **caractérisé en ce que** la bande de distribution (34) transporte le tabac provenant de la première station de traitement (18) alternativement dans un récipient de réception (35, 38) associé à chaque transporteur de tabac (26, 27), dans lequel la bande de distribution (34) peut être commandée de préférence selon le degré de remplissage du récipient de réception (35, 38).

9. Dispositif selon l'une quelconque des revendications 5 à 8, **caractérisé en ce que** plusieurs, en particulier quatre, lignes de travail (36, 37) sont formées dans la région de la deuxième station de traitement (19), en particulier dans le région des (deux) transporteurs de tabac (26, 27), à savoir deux lignes de travail (36, 37) de chaque transporteur de tabac (26, 27), dans lequel un flux de tabac (partiel) séparé (11) peut être transporté le long de chaque ligne de travail (36, 37).

10. Dispositif selon l'une quelconque des revendications 2 à 9, **caractérisé en ce que** deux peignes à aiguilles (42, 43) se succédant dans la direction de transport sont associés à chaque flux de tabac (11), qui pénètrent dans le flux de tabac (11) avec des aiguilles (44) de préférence en même temps par le haut, dans lequel les peignes à aiguilles (42, 43) sont mobiles l'un par rapport à l'autre dans la direction de transport du flux de tabac (11).

11. Dispositif selon l'une quelconque des revendications 1 à 10, **caractérisé en ce qu'**un peigne à aiguilles (42) s'immobilise après son entrée dans le flux de tabac (11) ou effectue un léger mouvement dans la direction de transport, et l'autre peigne à aiguilles (43) effectue un mouvement dans la direction de transport du flux de tabac (11) après l'entrée des aiguilles (44) dans le flux de tabac (11), dans lequel les peignes à aiguilles (42, 43) peuvent ensuite être ramenés en arrière hors du flux de tabac (11) par un mouvement ascendant.
